(19) Europäisches Patentamt
European Patent Office
Office européen des brevets

(11) **EP 2 742 985 A1**

(12) **EUROPEAN PATENT APPLICATION**

(43) Date of publication:
**18.06.2014 Bulletin 2014/25**

(51) Int Cl.:
**B01D 45/06** (2006.01)   **B01D 45/08** (2006.01)

(21) Application number: **12197597.3**

(22) Date of filing: **17.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **AIR PRODUCTS AND CHEMICALS, INC.**
**Allentown, PA 18195-1501 (US)**

(72) Inventors:
• **Licht, William Robert**
**Allentown, PA Pennsylvania 18103 (US)**

• **Zhang, Yu**
**Orefield, PA Pennsylvania 18069 (US)**
• **Wang, Andrew Wilson**
**Macungie, PA Pennsylvania 18062 (US)**
• **Tentarelli, Stephen Clyde**
**Schnecksville, PA Pennsylvania 18078 (US)**

(74) Representative: **Schwabe - Sandmair - Marx**
**Patentanwälte**
**Stuntzstraße 16**
**81677 München (DE)**

(54) **Particle separator**

(57)    A particle separator for use in a conduit for removing solid particles from a particle-laden gas. The particle separator comprises a particle collecting chamber, an inlet port for directing the particle-laden gas into the particle collecting chamber, and an inner deflector positioned at least partially within the particle collecting chamber and downstream of the inlet port. The walls of the particle collecting chamber may include a protrusion protruding toward the inside of the particle collecting chamber cooperating with the inner deflector to recirculate the gas within the particle collecting chamber. The particle separator may also include a sump for storing solid particles that have been captured.

FIG. 2

## Description

This invention was made at least in part with funding from the United States Department of Energy under DOE Cooperative Agreement No. DE-FC26-98FT40343. The United States Government has certain rights in this invention.

BACKGROUND

There is frequently a need in industry to remove solid particles from gas streams. In the case of ion transport membrane (ITM) technology, metal oxide particles, which may be present in the feed gas to the membrane modules, would contaminate the membranes and should therefore be removed from the feed gas upstream of any membranes.

Separators for removing liquid droplets from gas exist and are based on swirling or radial flow. Separators for removing solid particles from gas streams exist but generally require large equipment.

Some gas-liquid separators claim to remove solids from gas streams. These separators are designed to swirl the gas along the axis of flow causing the heavier particles to migrate towards the wall of a pipe. These devices may rely on surface tension to hold the liquid droplets, or wet solids, to surfaces of the device until there is sufficient accumulation to allow draining. Dry solids may rebound from the surface on contact and become re-entrained in the gas stream. For gas-liquid systems, the major goal of the device is to get the droplet to contact a collection surface. For gas-solid systems, it is necessary to provide a mechanism to accumulate and concentrate the particles.

Gas-solid separators are often designed as separate pieces of equipment, such as settling chambers, baffle chambers, louvers, cyclones (including multiclones) and impingement devices. Settling chambers require a large cross-sectional area for small gas velocities and high residence time for particles to disengage from the flowing gas. Internals such as baffles or louvers provide modest improvements. Cyclones are the industrial workhorse device for separating solid particles from a gas stream. Cyclones can be designed for high efficiency and will handle a wide range of solid loading on a continuous basis under a wide range of temperatures and pressures. Cyclones function by creating a downward spiraling gas flow path along the interior surface of the vessel with an upward spiraling gas flow centered in the middle. Particles in the gas stream move continuously outward until they contact the outer wall and slide downward to the outlet.

While conventional cyclones are efficient, cyclones are large devices. Industry desires in-line particle separators that are compact.

Impingement separators are designed as an array of baffle elements, each of which funnels a portion of the particle-laden gas onto an impingement surface. The baffle elements are shaped to deflect the gas in a curved flow path such that the particles accumulate near the impingement surface and may be separated from the bulk gas flow. U.S. 4,545,792 describes an impingement device.

Other particle separators include wet scrubbers that introduce a liquid into the gas stream to aid in the capture and retention of solid particles. There are also filter-type devices that clean gas by capturing particles within the filter media.

Industry desires to be able to effectively remove solid particles having a size as small as 40 micrometers, and sometimes less.

Industry desires particle separators that can operate at high temperatures because thermal expansion of components can complicate piping requirements.

Industry desires particle separators that can remove solid particles without creating excessive pressure drop through the separator.

Industry desires particle separators that can remove solid particles without requiring the use of liquids.

BRIEF SUMMARY

The present invention relates to the removal of solid particles from gases. More specifically, the present invention relates to a particle separator for use in a conduit for removing solid particles from a particle-laden gas.

There are several aspects of the process as outlined below.

Aspect 1. A particle separator comprising:

a particle collecting chamber having an upstream end and a downstream end, one or more walls forming the particle collecting chamber and connecting the upstream end to the downstream end, wherein the upstream end forms an opening and the downstream end has a wall which prevents the flow of gas from the downstream end of the particle collecting chamber into the conduit, at least a portion of an outside surface of the particle collecting chamber and at least a portion of an inside surface of the conduit forming a flow channel therebetween for transporting particle-depleted gas when the particle separator is placed in the conduit;
an inlet port for directing the particle-laden gas into the upstream end of the particle collecting chamber; and
an inner deflector having an upstream end and a downstream end, at least the downstream end of the inner deflector positioned within the particle collecting chamber, the inner deflector positioned downstream of the inlet port, wherein the projected area of the inlet port in the bulk flow direction overlaps at least a portion of the projected area of the inner deflector in the bulk flow direction.

Aspect 2. The particle separator according to aspect 1 wherein the projected area of the inner deflector is 50% to 200% of the projected area of the inlet port.

Aspect 3. The particle separator of aspect 1 or aspect 2 wherein the inlet port has a hydraulic diameter, $D_h$, and the downstream end of the inner deflector is a distance, $d$, from the inlet port, where the distance, $d$, is measured in the bulk flow direction;

$$\text{wherein } 0.1 \, D_h \leq d \leq 1 \, D_h.$$

Aspect 4. The particle separator of aspect 1 or aspect 2 wherein the upstream end of the inner deflector is narrower than a widest cross section, the widest cross section being downstream of the upstream end of the inner deflector, wherein the inlet port has a hydraulic diameter, $D_h$, and the widest cross section is a distance, $d$, from the inlet port, where the distance, $d$, is measured in the bulk flow direction;

$$\text{wherein } 0.1 \, D_h \leq d \leq$$

Aspect 5. The particle separator of any one of aspects 1 to 4 wherein an inlet pipe forms the inlet port.

Aspect 6. The particle separator of aspect 5 wherein the inlet pipe has a circular cross section.

Aspect 7. The particle separator of any one of aspects 1 to 4 wherein the inlet port is formed by one or more deflectors, the one or more deflectors narrowing the flow area in the bulk flow direction and terminating in the inlet port at the downstream end of the one or more deflectors.

Aspect 8. The particle separator of any one of aspects 1 to 5 and 7 wherein the inlet port is a slot.

Aspect 9. The particle separator of any one of aspects 1 to 8 wherein the cross-sectional area of the inlet port is 15% to 40% of the cross-sectional area of the conduit.

Aspect 10. The particle separator of any one of aspects 1 to 9 wherein the cross-sectional area of the opening at the upstream end of the particle collecting chamber is from 20% to 90%, or from 40% to 80% of the cross-sectional area of the conduit.

Aspect 11. The particle separator of any one of aspects 1 to 10 wherein the cross-sectional area of the flow channel is 5% to 80% of the cross-sectional area of the conduit.

Aspect 12. The particle separator of any one of aspects 1 to 11 further comprising:

an interflange element upstream of the one or more deflectors of claim 7 or the inlet port, for positioning the particle separator in the conduit, the interflange element in sealing relationship with a flange of the conduit

Aspect 13. The particle separator of any one of aspects 1 to 12 wherein the upstream end of the inner deflector is narrower than the downstream end of the inner deflector or a widest cross section of the inner deflector between the upstream end and the downstream end of the inner deflector.

Aspect 14. The particle separator of aspect 13 wherein the inner deflector is one of v-shaped, triangle-shaped, and cone-shaped.

Aspect 15. The particle separator of any one of aspects 1 to 14 wherein at least one of the one or more walls of the particle collecting chamber have a protrusion protruding toward the inside of the particle collecting chamber, wherein the protrusion is a distance $L_p$ from the downstream end of the particle collecting chamber, wherein the inner deflector is a distance $L_d$ from the downstream end of the particle collecting chamber, and where-

$$\text{in } 0.9 \leq \frac{L_d}{L_p} \leq 1.1.$$

Aspect 16. The particle separator of any one of aspects 1 to 15 further comprising:

a sump for storing the solid particles captured in the particle collecting chamber, the sump separated from the particle collecting chamber by a porous wall with connected-through porosity that allows the solid particles to move from the particle collecting chamber to the sump under the force of gravity.

Aspect 17. The particle separator of aspect 16 further comprising:

one or more particle evacuation conduits connecting the sump to a position outside the conduit for removing the solid particles from the sump.

BRIEF DESCRIPTION OF SEVERAL VIEWS OF THE DRAWINGS

FIG. 1 is an isometric view of the in-line particle separator.

FIG. 2 is a cutaway isometric view of the in-line particle separator.

FIG. 3 is a cutaway isometric view of the in-line particle separator viewed from the downstream end.

FIG. 4 is a cross section of an in-line particle separator.

FIG. 5 is a cross section of an in-line particle separator.

FIG. 6a is a velocity vector plot from a computational fluid dynamics simulation of a particle separator having no inner deflector and no protrusions.

FIG. 6b is a velocity vector plot from a computational fluid dynamics simulation of a particle separator having an inner deflector.

FIG. 6c is a velocity vector plot from a computational fluid dynamics simulation of a particle separator having an inner deflector and protrusions.

FIG. 7 is a plot of trapping efficiency versus particle diameter for various particle separator designs.

DETAILED DESCRIPTION

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity. The term "and/or" placed between the last two entities of a list of 3 or more entities means at least one of the entities in the list including any specific combination of entities in this list.

As used herein, "first," "second," "third," etc. are used to distinguish from among a plurality of steps and/or features, and is not indicative of the total number, or relative position in time and/or space unless expressly stated as such. For example, the disclosure of a "third" feature does not require at least three of said features unless expressly stated.

In order to aid in describing the invention, directional terms may be used in the specification and claims to describe portions of the present invention (e.g., upper, top, lower, bottom, left, right, etc.). These directional terms are merely intended to assist in describing and claiming the invention and are not intended to limit the invention in any way. In addition, reference numerals that are introduced in the specification in association with a drawing figure may be repeated in one or more subsequent figures without additional description in the specification in order to provide context for other features.

The terms "upstream" and "downstream" are defined in terms of the bulk flow direction of the gas.

The term "slot" as used herein is defined as an opening wherein any slot cross-section i.e., a section perpendicular to a flow axis through the respective opening, is non-circular and is not a square and is characterized by a major axis and a minor axis. The major axis is longer than the minor axis and the two axes are generally perpendicular one to the other. For example, the major cross-section axis of any slot extends between two ends of the slot cross-section, these two ends being most distantly apart from one another, and the minor cross-section axis is perpendicular to the major axis and extends between the sides of the slot cross-section. The slot may have a cross-section of any non-circular and non-square shape and each cross-section may be characterized by a center point or centroid, where centroid has the usual geometric definition.

A slot may be further characterized by a slot axis defined as a straight line connecting the centroids of all slot cross-sections. In addition, a slot may be characterized or defined by a center plane which intersects the major cross-section axes of all slot cross-sections. Each slot cross-section may have perpendicular symmetry on either side of this center plane. The center plane extends beyond either end of the slot and may be used to define the slot orientation relative to the nozzle body inlet flow axis as described below.

The present invention relates to a particle separator for removing solid particles from a particle-laden gas. A "particle-laden gas," is a gas containing particles or particulates, which are entrained in the gas. The particle separator is for use within a conduit and is enclosed within the conduit when the particle separator is placed in the conduit.

The particle separator according to the present invention is designed to collect dry, solid particles that would otherwise tend to rebound from surfaces on contact with a wall and become re-entrained in the gas stream.

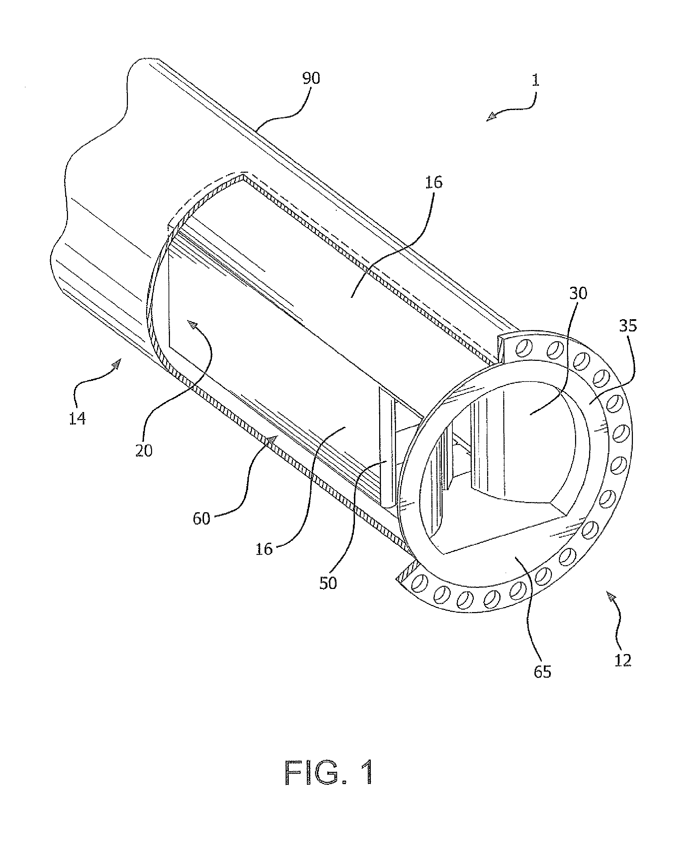

The particle separator will be described with reference to the figures, wherein like reference numbers refer to like elements throughout the several views. FIG. 1 shows the particle separator 1 enclosed within conduit 90 wherein a portion of conduit 90 has been cutaway in the figure.

With reference to the figures, the particle separator 1 comprises a particle collecting chamber 10. The particle collecting chamber 10 has an upstream end 12 and a downstream end 14, and one or more walls 16 forming the particle collecting chamber 10 and connecting the upstream end to the downstream end. The upstream end of the particle collecting chamber 10 forms an opening for introducing the particle-laden gas and the downstream end of the particle collecting chamber 10 has a wall 18 which prevents the flow of gas from the downstream end of the particle collecting chamber 10 into the conduit 90 downstream of the particle collecting chamber. Some of the one or more walls forming the particle collecting chamber may be shaped to match the contours of the conduit 90 in which the particle collecting chamber is enclosed (e.g. the top and bottom walls of particle collecting chamber 10).

The shape of the collecting chamber forces the gas to turn and exit at the upstream end. Due to inertia, the particles are unable to turn and are carried into the collection chamber 10, where the particles settle under the influence of gravity. The outgoing gas has fewer particles than the incoming gas.

The cross-sectional area of the opening at the upstream end of the particle collecting chamber 10 may be 20% to 90%, or 60% to 90%, or 70% to 90%, or 80% to 90% of the cross-sectional area of the conduit 90. The cross-sectional area of the conduit 90 is the open cross-sectional area, that is, not including the thickness of the material forming the conduit 90.

At least a portion of an outside surface of the particle collecting chamber 10 and at least a portion of an inside surface of the conduit 90 form a flow channel 20 therebetween for transporting particle-depleted gas when the particle separator 1 is placed in the conduit 90. The cross-sectional area of flow channel may be 5% to 80% of the cross-sectional area of conduit 90. The cross-sectional area of the flow channel is the open cross sectional area, that is, not including the thickness of the material forming the particle collecting chamber 10 or the conduit 90.

Particle-depleted gas flows through flow channel 20 and into a section of conduit 90 that is downstream of the particle collecting chamber 10.

The term "particle-depleted" means having a lesser amount of particles than the original stream from which it was formed (i.e. the particle-laden gas). "Depleted" does not mean that the gas is completely lacking particles.

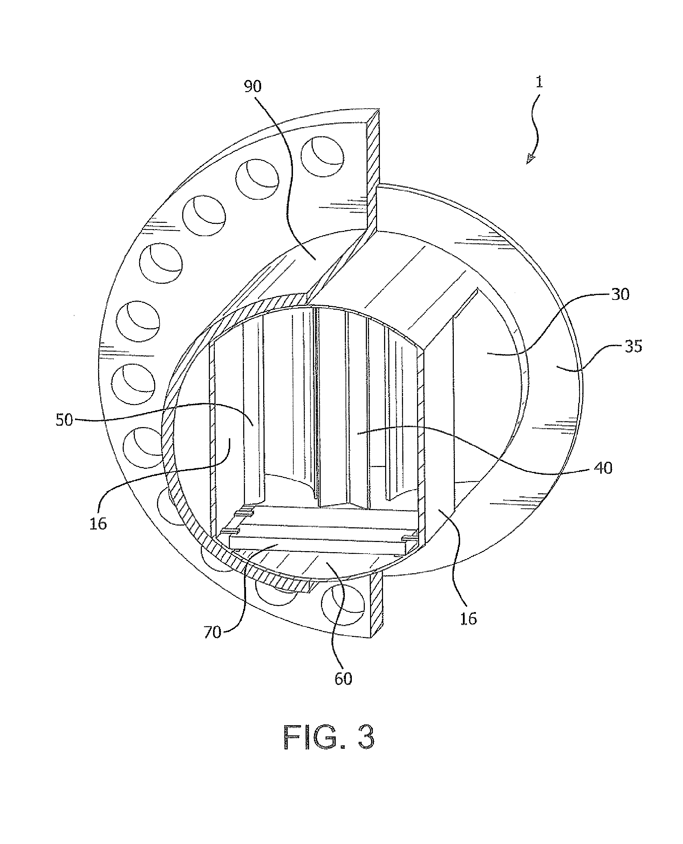

The particle separator 1 also comprises an inlet port 32 for directing the particle-laden gas into the upstream end 12 of the particle collecting chamber 10. The inlet port 32 may be formed by one or more deflectors 30 as shown in FIGS. 1-4. The one or more deflectors 30 narrow the flow area in the bulk flow direction and terminate in the inlet port 32 at the downstream end of the one or more deflectors 30. The one or more deflectors 30 may have a variety of shapes. The one or more deflectors may be curved or straight, and the angle may be steep or narrow. The inlet port 32 may be a slot. In this embodiment, the conduit 90 enclosing the particle separator 1 may have the same diameter as the conduit leading up to the particle separator 1.

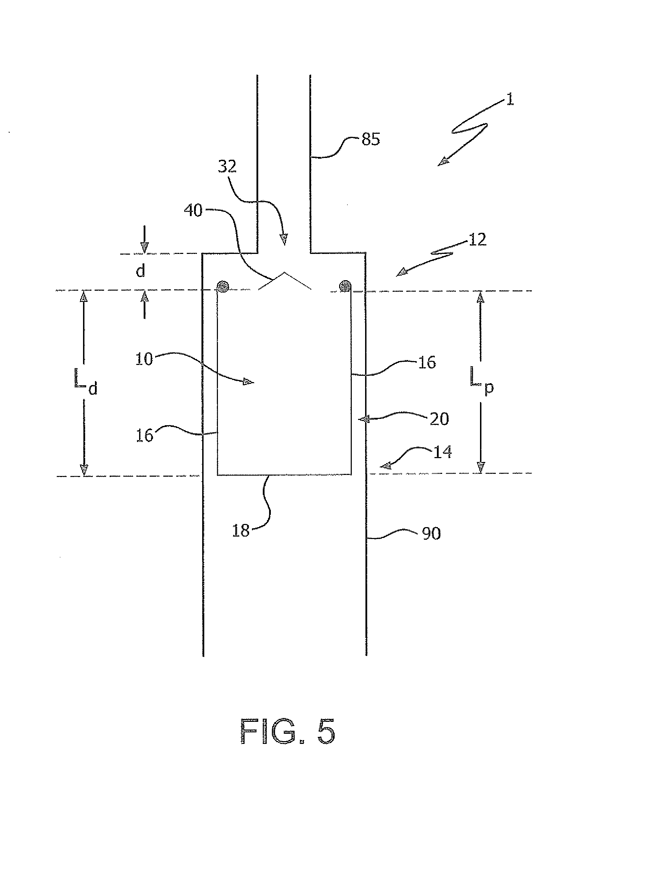

As shown in FIG. 5, the inlet port 32 may alternatively be formed by an inlet pipe 85 having a smaller effective diameter than the conduit 90. The inlet pipe 85 may have any desired cross section, for example, a circular cross section.

The cross-sectional area of the inlet port 32 affects the capture efficiency. At low inlet velocity, the large particles settle, but smaller particles follow the primary flow and are not projected into the collector. Increasing the velocity may improve the performance up to a point. However at high velocity, reflection off the surfaces may bounce some of the particles away from the collector which degrades performance. The cross-sectional area of the inlet port 32 may be 15% to 40% of the cross-sectional area of conduit 90.

The particle separator also comprises an inner deflector 40 having an upstream end and a downstream end. The inner deflector 40 is positioned downstream of the inlet port 32. The projected area of the inlet port 32 in the bulk flow direction overlaps at least a portion of the projected area of the inner deflector 40 in the bulk flow direction. The projected area is normal to the bulk flow direction. The projected area of the inner deflector 40 may be 50% to 200% of the projected area of the inlet port 32. At least the downstream end of the inner deflector 40 is positioned within the particle collecting chamber 10, however the entire inner deflector 40 may be positioned within the particle collecting chamber 10 in addition to the downstream end of the inner deflector 40.

The inner deflector 40 may be any suitable shape to deflect the particle-laden gas from flowing directly into the particle collecting chamber 10. The upstream end of the inner deflector 40 may be narrower than the downstream end of the inner deflector 40. The inner deflector 40 may be, for example, v-shaped, triangle-shaped, or cone-shaped.

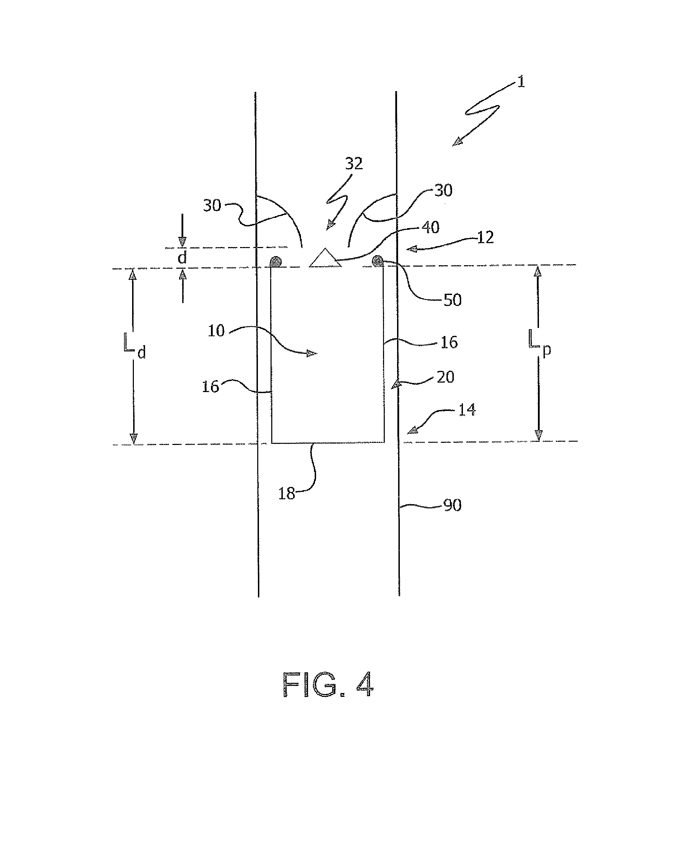

The inner deflector 40 may be suitably placed downstream of the inlet port 32. Typically, the downstream end of the inner deflector will be the widest cross section of the inner deflector. The inner deflector may be placed such that $0.1\,D_h \leq d \leq 1\,D_h$, where $d$ is the distance from the inlet port 32 to the downstream end of the inner deflector 40, and $D_h$ is the hydraulic diameter of the inlet port 32. The downstream end of the inner deflector 40 is a distance, $d$, (shown in FIG. 4 and FIG. 5) from the inlet port 32, where the distance, $d$, is measured in the bulk flow direction. The inlet port 32 has a hydraulic diameter, $D_h$, where the hydraulic diameter is defined in the conventional way, $D_h = \dfrac{4 \times \text{cross - sectional area}}{\text{wetted perimeter}}$.

For example, for a rectangular channel with sides $a$ and $b$, the area is $ab$ and the perimeter is $2(a+b)$. Thus, for a rectangular cross section $D_h = \dfrac{4(ab)}{2(a+b)}$. For a circular cross section, the hydraulic diameter is simply the diameter.

In case the downstream end of the inner deflector is not the widest cross section of the inner deflector, the inner deflector may be placed such that $0.1\,D_h \leq d \leq 1\,D_h$, where $d$ is the distance from the inlet port 32 to the widest cross section of the inner deflector 40, where $D_h$ is the hydraulic diameter of the inlet port 32, and where the distance, $d$, is measured in the bulk flow direction. The widest cross section is downstream of the upstream end of the inner deflector 40, but can be upstream of a downstream end of the inner deflector 40.

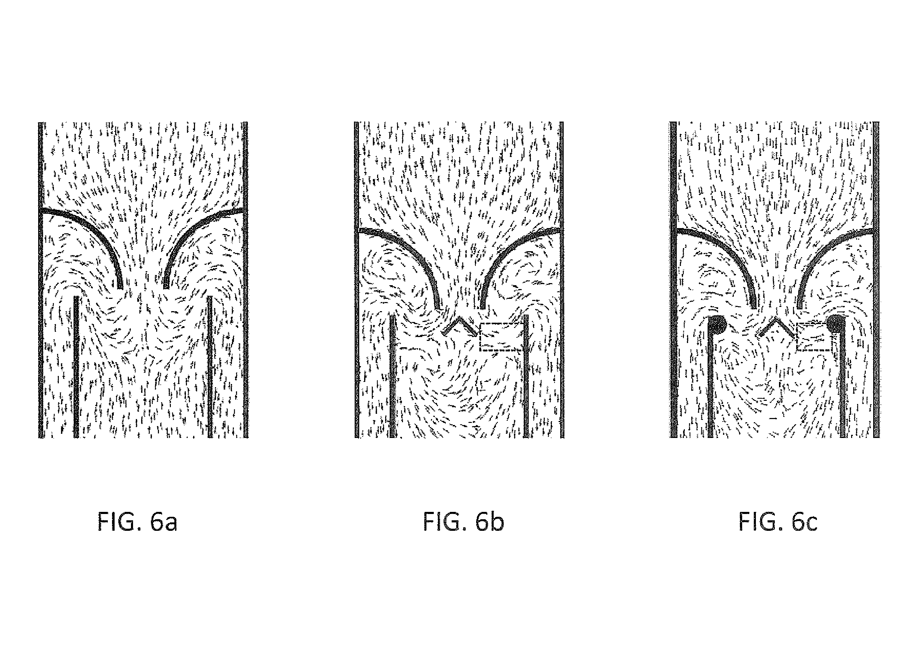

The inner deflector 40 has several important functions, such as bending the gas streamlines to enhance inertial separation, delivering the particles into the collector by collision, and preventing particles from exiting the particle collecting chamber by enabling the formation of trapping vortices. These effects may be seen by comparing computational fluid dynamics (CFD) modeling results for a particle separator with an inner deflector (shown in FIG. 6(b)) and another particle separator without an inner deflector (shown in FIG. 6(a)).

Once in the particle collecting chamber, the solid particles have an opportunity to settle under the influence of gravity. Large, heavy particles will settle quickly while small, light particles settle slowly. A major function of the inner deflector is to shape the formation of secondary flows, driven by the high velocity gas flow near the mouth of the collector, which would otherwise carry these slowly settling particles back into the main flow stream. Secondary flows are not eliminated by the inner deflector, but those which develop have flow vectors at the trailing edge of the deflector which are perpendicular to the major flow direction. A dashed box in each of FIGS. 6(b) and 6(c) highlights this region where the flow is moving perpendicular to the primary flow direction in contrast to the zone in FIG. 6(a) which shows a flow stream leaving the collector which may carry small particles back into the main flow (note that these figures show one slice of a three dimensional flow pattern). The inner deflector creates this advantageous flow pattern we refer to as "trapping vortices". Small, slowly settling particles may be caught in this vortex and carried around and around, but are not projected back into the main flow stream. Some particles may escape from the particle collecting chamber due to turbulent diffusion effects (Brownian motion) if they are carried close to the boundary between the primary and secondary flows.

The particle separator is suitably oriented to prevent the solid particles, once captured in the particle collecting chamber 10, from falling out of the particle collecting chamber 10 and back into flow channel 20 due to gravity.

At least one of the one or more walls 16 of the particle collecting chamber 10 may have a protrusion 50 protruding toward the inside of the particle collecting chamber 10. The protrusion(s) may be substantially at the same cross section as the inner deflector, such that

$$0.9 \le \frac{L_d}{L_p} \le 1.1,$$ where $L_p$ is the distance from the downstream end of the protrusion to the downstream end 14 of the particle collecting chamber 10 and $L_d$ is the distance from the downstream end of the inner deflector to the downstream end 14 of the particle collecting chamber 10 as illustrated in FIG. 4 and FIG. 5.

The protrusion, when present, is positioned to cooperate with the inner deflector 40 to recirculate the gas within the particle collecting chamber 10 and cause the gas from the inlet port 32 to turn and enter the flow channel 20 without penetrating deep into the particle collecting chamber 10. The effect of protrusions may be seen by comparing the CFD modeling results for a particle separator with protrusions (shown in FIG. 6(c)) with the earlier particle separators without protrusions (FIG. 6(a) and FIG. 6(b)). The protrusion(s) further shape and control both the primary and secondary flows. In particular they have the effect of reducing the size of the interface between trapping vortices and the primary flow. This reduces the opportunity for suspended particles to transfer out of the collection chamber by turbulent diffusion effects. The result of restricting the opening in the collector with protrusions is improvement in the collection efficiency of the particle separator.

The particle separator 1 may further comprise an interflange element 35 positioned upstream of the one or more deflectors 30. The interflange element, when present, helps position the particle separator 1 in the conduit 90 and seals with a flange of conduit 90. The interflange element 35 may be secured at a flange connection between two pipe spools.

The particle separator 1 may further comprise a sump 60 for storing the solid particles captured in the particle collecting chamber 10 until the particles are removed from the sump. The sump 60 may be separated from the particle collecting chamber 10 by a porous wall 70. The porous wall 70 has connected-through porosity that allows the solid particles to move from the particle collecting chamber 10 to the sump 60 under the force of gravity. The term "connected-through porosity" means that the porous wall has a matrix of pores throughout its three-dimensional structure which is capable of transferring the solid particles from one side of the porous wall to the opposite side of the porous wall.

At the upstream end of the sump is a wall 65 that prevents the particle-laden gas from entering the sump in the bulk flow direction so that it closes the sump at the upstream end. The surface of sump opposite the porous wall 70 may match the contours of the conduit 90.

The use of the sump allows for greater storage capacity of the particle separator and helps to prevent re-entrainment of the particles once collected.

The particles may be removed from the sump continuously or batchwise.

The particle separator 1 may also further comprise one or more particle evacuation conduits 80 connecting the sump 60 to a position outside the conduit 90 for removing the solid particles from the sump 60. The one or more particle evacuation conduits may be connected to a zone outside the conduit 90 having a lower pressure than the process gas. The one or more particle evacuation conduits may be closable (i.e. by a valve or cap). When the one or more particle evacuation conduits are opened, the pressure difference will cause some of the process gas to flow out through the one or more particle evacuation conduits and remove the particles from the sump. The one or more particle evacuation conduits allow for continuous removal or periodic removal of the solid particles without the need for opening the conduit 90.

Without the one or more particle evacuation conduits, the particles may be removed batchwise. For example, in the case that the number of particles in the particle-laden gas is low, it may be sufficient to remove particles from the sump during shutdown of the process. In this case, a vacuum line may be inserted into the sump to remove the particles or mechanical means such as a shovel or dustpan may be used.

The particle separator may be installed in-line in a conduit and is compact compared to other particle separation options. The compact design allows the system to be installed in smaller spaces and is particularly attractive for high temperature service where thermal expansion complicates piping requirements, resulting in a lower cost system.

The particle separator 1 is most efficient at removing larger sized particles (greater than 40 micron diameter). The particle separator may be used upstream of and in combination with a filter to improve the collection efficiency and remove a greater size range of particles. A combined particle separator and filter provides greater capacity than a filter alone and reduces the slip of small sized particles compared to using the filter alone.

Examples

Computational fluid dynamic (CFD) simulations were performed for various particle separators showing the effect of various features. ANSYS® Fluent software was used.

The CFD model was a steady-state, 3-dimensional model. Steady state incompressible Navier-Stokes equations were solved for the fluid flow using the standard 2-equation k-epsilon turbulence model. The Eulerian-Langrangian modeling approach was applied whereby the gas phase is treated as continuous and the particle trajectories are calculated and tracked. Interactions between the gas stream and the particles are captured by spherical drag law and two-way turbulent coupling.

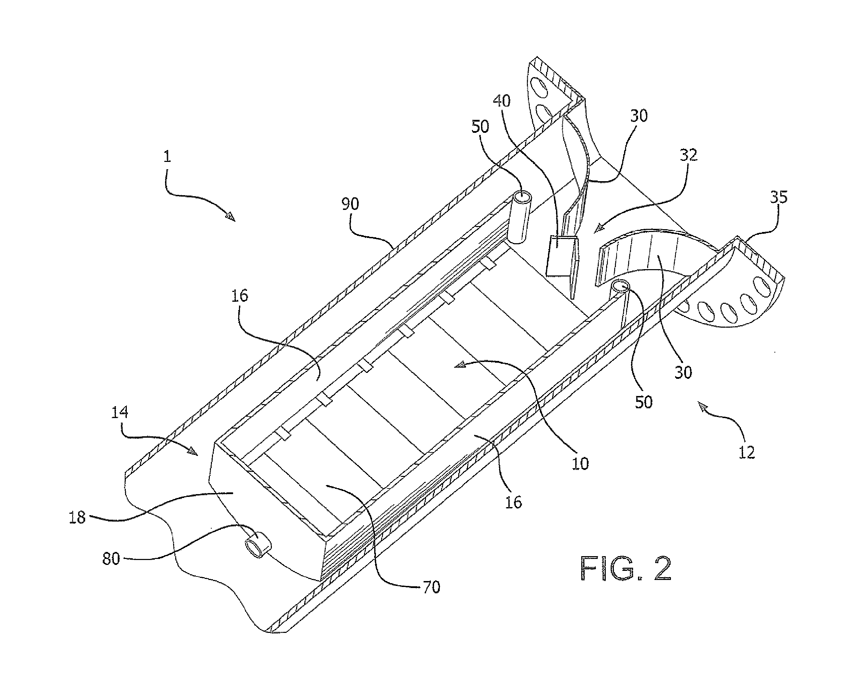

A particle collecting chamber in a 600 mm diameter pipe (conduit) was simulated. The pipe (conduit) was horizontal. The particle collecting chamber was 400 mm wide and centered side-to-side in the pipe. The particle collecting chamber had vertical walls extending from top to bottom in the pipe and had a flat floor (corresponding to 70 in FIG. 2), the flat floor being the lowest surface of the particle collecting chamber with respect to gravity. The top of the particle collecting chamber coincided with an upper rounded portion of the pipe wall. The sump was located directly below the flat floor of the particle collecting chamber. The lower wall of the sump coincided with the lower rounded pipe wall. The sump was about 80 mm deep at its deepest point.

A gas velocity of 6 m/s was specified in the upstream conduit and a gas density of 5 kg/m$^3$ was used. 2000 particles having a density of 5000 kg/m$^3$ and uniform size were released at the upstream end of the separator with a uniform distribution across the inlet cross-sectional plane. The model assumed that when the trajectory of a particle hits the flat floor (corresponding to 70 in FIG. 2) of the collector, the particle is removed from the simulation and labeled as "captured." All the other surfaces (e.g. 16 in FIG. 2) are modeled as reflective. The particle-wall collision was assumed to be partially inelastic with the particle leaving the surface with a reflected velocity equal to 80% of the incoming velocity.

The normal component of the velocity vector is reversed (multiplier = -0.8) while the tangential component was maintained (multiplier = 0.8).

Example 1 - Base Case

The base case simulation was for a particle separator having no inner deflector and no protrusions, like that shown in FIG. 6(a).

The inlet port was formed by two deflectors representing two sheets bent into circular arcs having a radius of 225 mm and fitting the inside dimensions of the pipe and fixed in place. Between the two deflectors, the inlet port was a slot extending from the top of the pipe to the top of the sump and having a width of 150 mm.

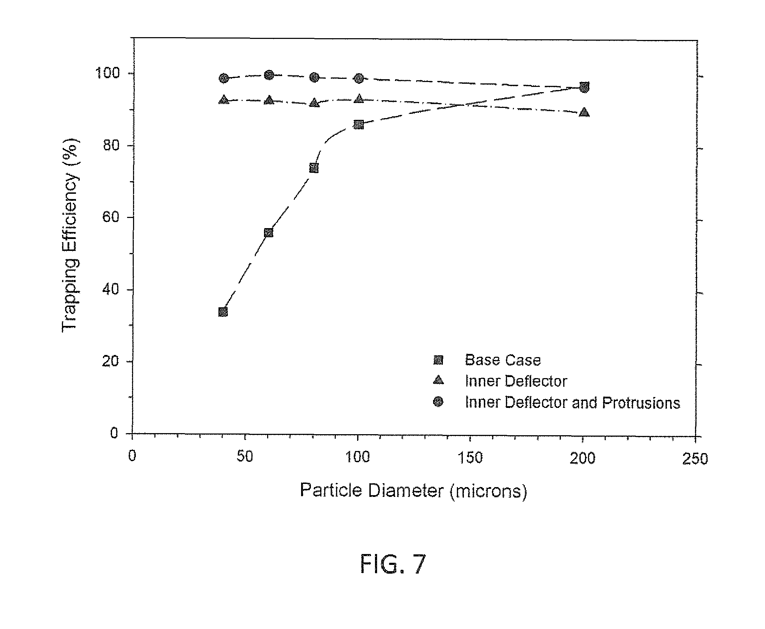

Results of the CFD simulation for the base case are plotted in FIG. 7 where the trapping efficiency is plotted as a function of the particle diameter. The trapping efficiency is defined as the percentage of captured particles out of the total number of particles included in the simulation. The efficiency is an average of 10 simulation runs with 2000 particles in each run (for each particle size identified in the plot). The relative standard deviation of the trapping efficiency for the 10 runs was less than 5% for all cases.

Example 2 - Inner Deflector

The geometry of the base case was modified to include an inner deflector, like that shown in FIG. 6(b). The inner deflector was v-shaped. The inner deflector had a 90° angle and was 100 mm wide at the base and the upstream tip as aligned with the upstream end of the particle collecting chamber.

Results of the CFD simulation for the inner deflector case are plotted in FIG. 7 where the trapping efficiency is plotted as a function of the particle diameter.

The use of the inner deflector shows marked improvement in trapping efficiency compared to the base case without an inner deflector, particularly for smaller particle diameters (40 to 100 micron).

Example 3 - Inner Deflector and Protrusions

The geometry of Example 2 was modified to include protrusions at the upstream end of the particle collecting chamber like that shown in FIG. 6(c). Each protrusion was 50 mm diameter.

The use of the protrusions shows marked improvement in trapping efficiency compared to the base case, and also improvement in trapping efficiency compared to Example 2. The results of the CFD simulation are plotted in Figure 7.

We claim:

## Claims

1. A particle separator for use in a conduit for removing solid particles from a particle-laden gas, the particle separator comprising:

   a particle collecting chamber having an upstream end and a downstream end, one or more walls forming the particle collecting chamber and connecting the upstream end to the downstream end, wherein the upstream end forms an opening and the downstream end has a wall which prevents the flow of gas from the downstream end of the particle collecting chamber into the conduit, at least a portion of an outside surface of the particle collecting chamber and at least a portion of an inside surface of the conduit forming a flow channel therebetween for transporting particle-depleted gas when the particle separator is placed in the conduit;

an inlet port for directing the particle-laden gas into the upstream end of the particle collecting chamber; and

an inner deflector having an upstream end and a downstream end, at least the downstream end of the inner deflector positioned within the particle collecting chamber, the inner deflector positioned downstream of the inlet port, wherein the projected area of the inlet port in the bulk flow direction overlaps at least a portion of the projected area of the inner deflector in the bulk flow direction.

2. The particle separator of claim 1 wherein the projected area of the inner deflector is 50% to 200% of the projected area of the inlet port.

3. The particle separator of any one of the preceding claims wherein the inlet port has a hydraulic diameter, $D_h$, the downstream end of the inner deflector is a distance, $d$, from the inlet port, where the distance, $d$, is measured in the bulk flow direction; wherein $0.1\,D_h \leq d \leq 1\,D_h$.

4. The particle separator of claim 1 or claim 2 wherein the upstream end of the inner deflector is narrower than a widest cross section of the inner deflector, the widest cross section being downstream of the upstream end of the inner deflector, wherein the inlet port has a hydraulic diameter, $D_h$, and the widest downstream cross section of the inner deflector is a distance, $d$, from the inlet port, where the distance, $d$, is measured in the bulk flow direction; wherein $0.1\,D_h \leq d \leq 1\,D_h$.

5. The particle separator of any one of the preceding claims wherein an inlet pipe forms the inlet port.

6. The particle separator of claim 5 wherein the inlet pipe has a circular cross section.

7. The particle separator of any one of claims 1 to 4 wherein the inlet port is formed by one or more deflectors, the one or more deflectors narrowing the flow area in the bulk flow direction and terminating in the inlet port at the downstream end of the one or more deflectors.

8. The particle separator of any one of the preceding claims wherein the cross-sectional area of the inlet port is 15% to 40% of the cross-sectional area of the conduit.

9. The particle separator of any one of the preceding claims wherein the cross-sectional area of the opening at the upstream end of the particle collecting chamber is 20% to 90%, or 40% to 80% of the cross-sectional area of the conduit.

10. The particle separator of any one of the preceding claims wherein the cross-sectional area of the flow channel is 5% to 80% of the cross-sectional area of the conduit.

11. The particle separator of any one of the preceding claims further comprising:

an interflange element upstream of the one or more deflectors of claim 7 or the inlet port, for positioning the particle separator in the conduit, the interflange element in sealing relationship with a flange of the conduit.

12. The particle separator of any one of the preceding claims wherein the upstream end of the inner deflector is narrower than the downstream end of the inner deflector or a widest cross section of the inner deflector downstream of the upstream end of the inner deflector.

13. The particle separator of any one of the preceding claims wherein at least one of the one or more walls of the particle collecting chamber have a protrusion protruding toward the inside of the particle collecting chamber, wherein the downstream end of the protrusion is a distance $L_p$ from the downstream end of the particle collecting chamber, wherein the downstream end of the inner deflector is a distance $L_d$ from the downstream end of the particle collecting chamber, and wherein $0.9 \leq \dfrac{L_d}{L_p} \leq 1.1$.

14. The particle separator of any one of the preceding claims further comprising:

a sump for storing the solid particles captured in the particle collecting chamber, the sump separated from the particle collecting chamber by a porous wall with connected-through porosity that allows the solid particles to move from the particle collecting chamber to the sump under

**EP 2 742 985 A1**

the force of gravity.

15. The particle separator of claim 14 further comprising:

one or more particle evacuation conduits connecting the sump to a position outside the conduit for removing the solid particles from the sump.

FIG. 1

FIG. 2

FIG. 3

FIG. 4

FIG. 5

FIG. 6a

FIG. 6b

FIG. 6c

FIG. 7

Europäisches
Patentamt
European
Patent Office
Office européen
des brevets

**EUROPEAN SEARCH REPORT**

Application Number

EP 12 19 7597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 02/32546 A1 (BOSCH GMBH ROBERT [DE]; LENZING THOMAS [DE]) 25 April 2002 (2002-04-25) * figure 1 * | 1-5, 7-11,13<br><br><br>14,15 | INV.<br>B01D45/06<br>B01D45/08 |
| X<br><br><br>Y | DE 206 297 C (ALWIN BARTL IN COTTBUS) 4 December 1906 (1906-12-04)<br><br>* figure 2 * | 1-5, 7-10,12, 13<br>14,15 | |
| X<br><br>Y | GB 178 277 A (HEENAN & FROUDE LTD; GEORGE HENRY WALKER) 20 April 1922 (1922-04-20) * figures 1,3,5 * | 1-10,13<br><br>14,15 | |
| X<br><br>Y | FR 2 527 936 A1 (CHAUBE ROBERT [FR]) 9 December 1983 (1983-12-09) * figures 1-2 * | 1-5, 7-10,13<br>14,15 | |
| Y | US 3 559 373 A (GARRETT ROBERT I) 2 February 1971 (1971-02-02) * figure 1 * | 14,15 | TECHNICAL FIELDS SEARCHED (IPC) |
| Y | WO 00/40834 A1 (SHELL INT RESEARCH [NL]; TJEENK WILLINK CORNELIS ANTONI [NL]) 13 July 2000 (2000-07-13) * page 16, line 7 - line 16; figure 1 * | 14,15 | B01D |
| A | FR 2 755 035 A1 (RENAULT [FR]) 30 April 1998 (1998-04-30) * the whole document * | 1-13 | |

The present search report has been drawn up for all claims

| Place of search | Date of completion of the search | Examiner |
|---|---|---|
| Munich | 22 April 2013 | Arrojo, Sergio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 2 742 985 A1**

## ANNEX TO THE EUROPEAN SEARCH REPORT
## ON EUROPEAN PATENT APPLICATION NO.

EP 12 19 7597

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2013

| Patent document cited in search report | | Publication date | Patent family member(s) | | Publication date |
|---|---|---|---|---|---|
| WO 0232546 | A1 | 25-04-2002 | AU | 2049602 A | 29-04-2002 |
| | | | BR | 0107314 A | 27-08-2002 |
| | | | CN | 1394148 A | 29-01-2003 |
| | | | DE | 10051307 A1 | 02-05-2002 |
| | | | EP | 1235627 A1 | 04-09-2002 |
| | | | JP | 2004511336 A | 15-04-2004 |
| | | | MX | PA02006009 A | 27-03-2003 |
| | | | PL | 354706 A1 | 09-02-2004 |
| | | | US | 2003075046 A1 | 24-04-2003 |
| | | | WO | 0232546 A1 | 25-04-2002 |
| DE 206297 | C | 04-12-1906 | NONE | | |
| GB 178277 | A | 20-04-1922 | NONE | | |
| FR 2527936 | A1 | 09-12-1983 | NONE | | |
| US 3559373 | A | 02-02-1971 | NONE | | |
| WO 0040834 | A1 | 13-07-2000 | AT | 241756 T | 15-06-2003 |
| | | | AU | 755360 B2 | 12-12-2002 |
| | | | AU | 3044600 A | 24-07-2000 |
| | | | BR | 9916719 A | 04-12-2001 |
| | | | CA | 2358071 A1 | 13-07-2000 |
| | | | CN | 1334896 A | 06-02-2002 |
| | | | DE | 69908419 D1 | 03-07-2003 |
| | | | DE | 69908419 T2 | 18-03-2004 |
| | | | DK | 1141519 T3 | 15-09-2003 |
| | | | EP | 1141519 A1 | 10-10-2001 |
| | | | ID | 29448 A | 30-08-2001 |
| | | | NO | 20013263 A | 17-08-2001 |
| | | | NZ | 512601 A | 30-06-2003 |
| | | | UA | 73729 C2 | 15-10-2001 |
| | | | UA | 73730 C2 | 15-10-2001 |
| | | | US | 6962199 B1 | 08-11-2005 |
| | | | WO | 0040834 A1 | 13-07-2000 |
| | | | ZA | 200105390 A | 30-09-2002 |
| FR 2755035 | A1 | 30-04-1998 | EP | 0839566 A1 | 06-05-1998 |
| | | | FR | 2755035 A1 | 30-04-1998 |

EPO FORM P0459

For more details about this annex : see Official Journal of the European Patent Office, No. 12/82

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4545792 A